Europäisches Patentamt

European Patent Office

Office européen des brevets

(19)

(11) Numéro de publication: **0 007 859**

**A1**

(12) **DEMANDE DE BREVET EUROPEEN**

(21) Numéro de dépôt: 79400504.1

(22) Date de dépôt: 16.07.79

(51) Int. Cl.³: **B 01 D 11/02**
**C 13 D 1/10**

(30) Priorité: 18.07.78 FR 7821221

(43) Date de publication de la demande:
06.02.80 Bulletin 80/3

(84) Etats Contractants Désignés:
AT BE CH DE GB IT NL

(71) Demandeur: **SOCIETE SUCRIERE D'ETUDES ET DE CONSEILS, Société anonyme**
**Aandorenstraat 1**
**B-3300 Tirlemont(BE)**

(71) Demandeur: **Société FIVES-CAIL BABCOCK**
**7, rue Montalivet**
**F-75383 Paris Cedex 08(FR)**

(72) Inventeur: **Ledoux, Jean**
**17, Allée du Tardenois**
**F-59650 Villeneuve d'Ascq(FR)**

(74) Mandataire: **Fontanié, Etienne**
**7, rue Montalivet**
**F-75383 Paris Cedex 08(FR)**

(54) Perfectionnements aux appareils rotatifs de lavage et extraction à contre-courant, applicables notamment en sucrerie.

(57) L'invention concerne les appareils rotatifs de lavage et d'extraction à contre-courant pour le traitement de matières solides au moyen d'un liquide constitués par un cylindre horizontal (1) divisé en une série de compartiments dans lesquels les matières solides sont successivement mélangées au liquide puis séparées de celui-ci.

Pour améliorer la distribution du liquide dans la masse des matières solides, on place devant l'entrée du liquide dans chaque compartiment une tôle (9) comportant une ouverture aux bords de laquelle vient se raccorder un épi (23) creux et perforé faisant saillie dans le compartiment de manière que le liquide sorte de l'épi suivant une direction sensiblement parallèle à l'axe du cylindre (1).

FIG 2

EP 0 007 859 A1

Perfectionnements aux appareils rotatifs de lavage et extraction à contre-courant, applicables notamment en sucrerie

La présente invention concerne des perfectionnements aux appareils rotatifs de lavage et d'extraction à contre-courant,
au moyen d'un liquide, de produits faisant partie de matières
solides, constitués par un cylindre horizontal divisé en
une série de compartiments délimités par des cloisons et
dans lesquels la phase solide est à chaque fois mélangée à,
puis séparée de la phase liquide, cette séparation s'effectuant à l'aide d'éléments de relevage perforés, permettant
au liquide de passer dans la cellule ou le compartiment suivant, perfectionnements ayant pour but d'améliorer la distribution du liquide et le contact entre phase liquide et phase
solide.

On connaît de tels extracteurs rotatifs compartimentés équipés de dispositifs d'étalement et de freinage de l'écoulement de la phase liquide, constitués par des écrans ajourés
ou perforés et éventuellement par des portions de chaînes,
disposés en aval de l'élément de relevage perforé d'où s'écoule la phase liquide. Ces dispositifs évitent le soulèvement de la phase solide, mais n'empêchent pas que celle-ci
soit contournée par la phase liquide. On a constaté, en
effet, dans de tels appareils que le mélange des deux phases
n'était pas homogène et ne se faisait pas en profondeur.

La présente invention permet de remédier à cet inconvénient.
Elle consiste à disposer, en aval de l'élément de relevage
perforé, une tôle comportant une ouverture allongée, sensiblement centrale, au bord de laquelle vient se raccorder un
épi creux et perforé faisant saillie dans le compartiment,
de manière que le flux liquide s'écoule dans toute l'épaisseur de la phase solide suivant une direction sensiblement
parallèle à l'axe de l'appareil. Un autre perfectionnement
est constitué par des chicanes, de préférence en forme d'U,
qui sont fixées sur le cylindre et les parois délimitant
les compartiments, la base de l'U étant tournée alternativement vers la périphérie et vers l'axe du cylindre, de façon à provoquer des variations de vitesse d'écoulement par restriction des sections de passage et, par conséquent un brassage améliorant le contact entre phases liquide et solide.

D'autres détails et particularités de l'invention ressortiront de la description donnée ci-après à titre non limitatif, de plusieurs formes de réalisation de l'invention, avec référence aux dessins dans lesquels :

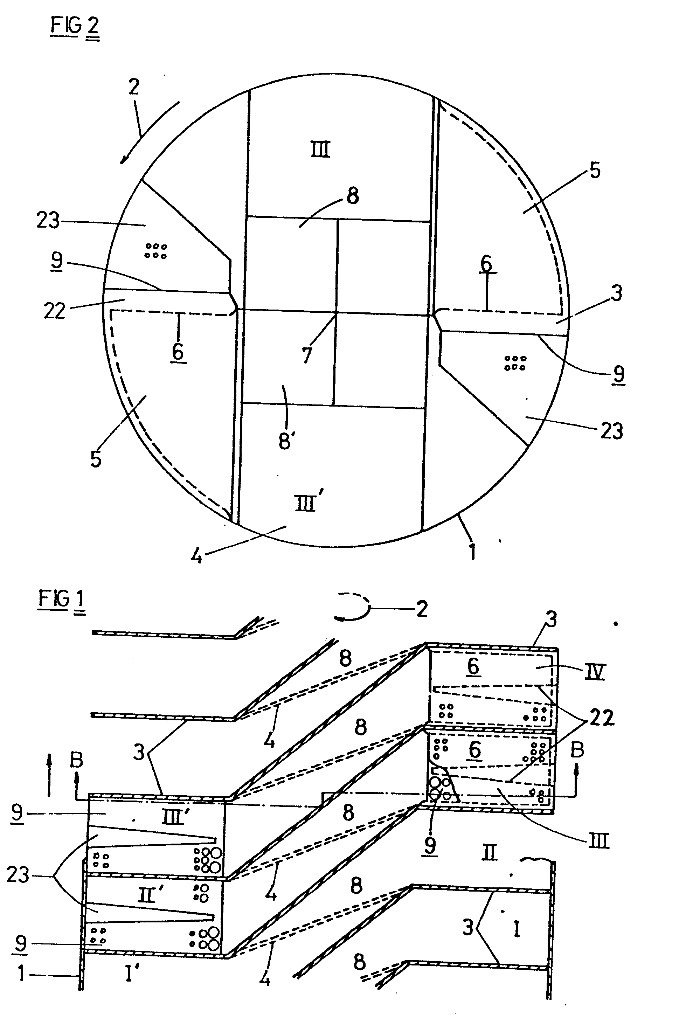

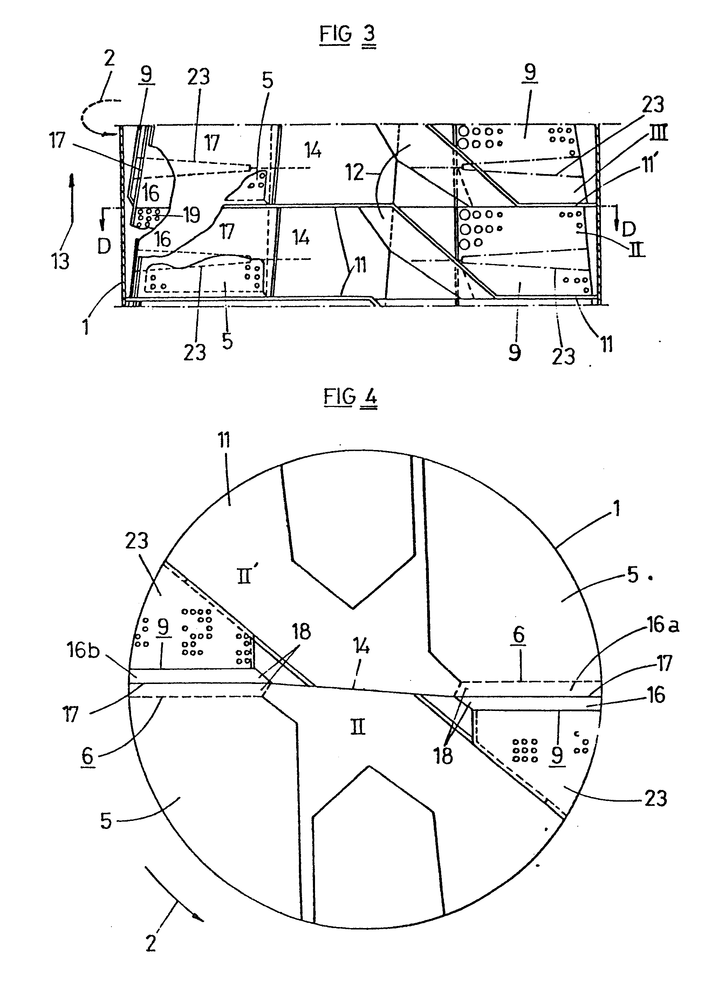

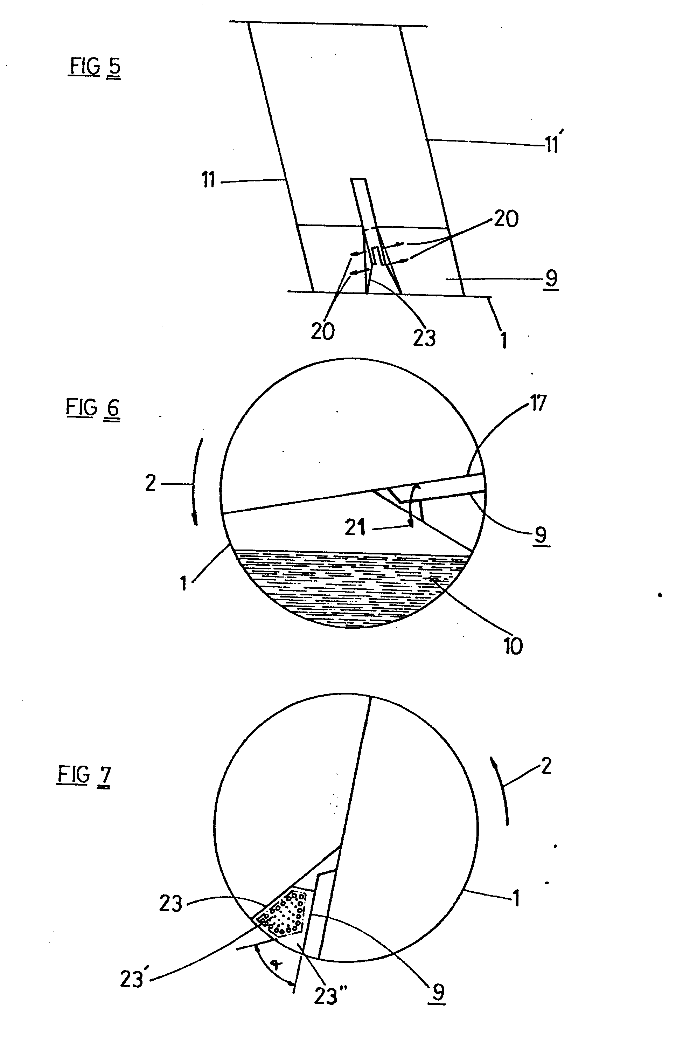

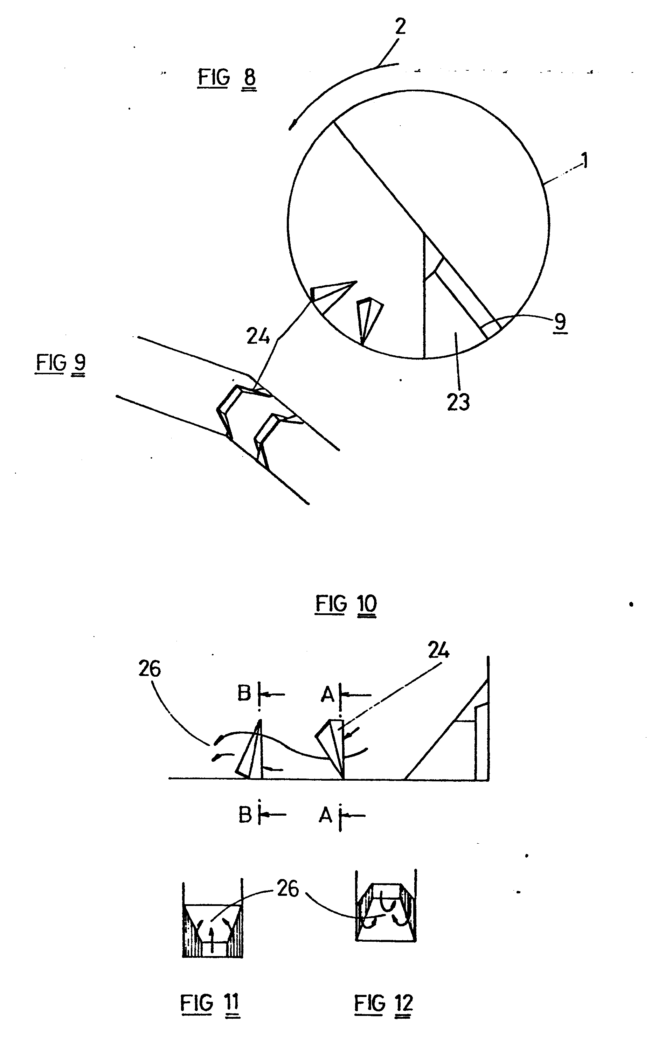

La figure 1 représente une vue schématique avec coupes partielles, d'un tronçon d'un premier type d'appareil extracteur présentant le perfectionnement selon l'invention ; la figure 2 représente une vue schématique en coupe suivant la ligne BB de la figure 1 ; la figure 3 représente une vue schématique, avec coupes partielles, d'un autre type d'appareil extracteur, présentant le perfectionnement selon l'invention ; la figure 4 représente une vue schématique en coupe, suivant la ligne DD de la figure 3 ; la figure 5 représente un compartiment de l'extracteur vu de côté ; les figures 6 et 7 représentent des variantes vues suivant la direction de l'axe de l'extracteur ; la figure 8 représente de façon schématisée la répartition des chicanes de brassage dans un compartiment ; la figure 9 est une vue en perspective de ces chicanes ; la figure 10 montre l'écoulement du mélange le long de la virole développée ; la figure 11 est une vue en coupe suivant B-B de la figure 10 et la figure 12 est une vue en coupe suivant A-A de la même figure.

Dans les différentes figures, les mêmes chiffres de référence désignent des éléments identiques ou similaires.

Les figures 1 à 4 représentent un tronçon d'un appareil d'extraction par un liquide, de produits faisant partie de matières solides, le liquide et les matières solides ayant des déplacements relatifs résultant de sens opposés. Ces appareils, bien connus notamment dans l'industrie sucrière, comprennent un cylindre 1 à axe horizontal, pouvant tourner en direction de la flèche 2 et divisé en compartiments.

Sur les figures 1 et 2 ces compartiments sont formés par une vis transporteuse constituée d'une succession de portions de cloisons pleines diamétrales 3 raccordées par des portions de cloisons pleines inclinées 4. Les compartiments sont subdivisés en deux séries de cellules I, I', II, II', ... par des éléments de relevage 5 des matières solides, perméables au liquide, constitués par des paniers à trous, dont les fonds 6 sont reliés deux par deux par une paroi pleine 7. Deux séries de couloirs inclinés 8, 8' sont prévus dans la zone centrale du tambour 1 pour diriger les fractions de matières solides relevées par les paniers 5, lorsqu'ils passent par la partie basse du tambour, dans une cellule de la même série, distante de deux cellules, dans la direction opposée à celle de transport de la vis.

Les fractions de liquide, séparées des fractions de matières solides relevées par les paniers 5 s'écoulent chacune dans la cellule de l'autre série de cellules, qui, si l'on prend en considération le sens de rotation du tambour, se trouve immédiatement en amont de la cellule qu'elle quitte afin de se mélanger à une nouvelle fraction de matières solides avec laquelle elle progresse dans le sens de transport de la vis jusqu'au relevage de celles-ci par le panier de cette cellule de l'autre série.

Afin de répartir uniformément la fraction de liquide qui à chaque fois est séparée d'une fraction de matières solides, dans la masse de solides qu'elle va rencontrer dans la nouvelle cellule on prévoit devant l'entrée de chaque cellule I, I', II, II', ... une tôle 9 comportant une ouverture 22, aux bords de laquelle se raccorde un épi creux, perforé 23.

Les tôles 9 s'étendent axialement à chaque fois entre deux spires successives sensiblement parallèlement aux fonds 6 des paniers 5 et radialement depuis la paroi périphérique de la virole 1 sur au moins une distance égale à la longueur des fonds 6 des paniers. Ces tôles peuvent être pleines ou comporter des ouvertures pour éviter l'accumulation du liquide.

Les épis creux 23 font saillie à l'intérieur de chaque cellule et le flux liquide s'écoule dans une direction parallèle à l'axe de rotation de l'appareil.

Dans l'appareil selon les figures 3 et 4, le sens de rotation du tambour 1 est indiqué par la flèche 2, les spires du transporteur à vis, constituées d'une succession de cloisons diamétrales pleines 11 échancrées, reliées par des cloisons pleines inclinées 12 assurent le transport des matières solides en direction de la flèche 13. Une cloison axiale 14 pleine qui s'étend entre les spires successives ainsi que des paniers diamétralement opposés 5, divisent les compartiments définis par les spires en deux séries de cellules, telles que II, II', de mise en contact à chaque fois d'une fraction de matières solides et d'une fraction de liquide. Pour la progression des fractions de liquide dans le sens opposé à celui de la flèche 13, des conduits inclinés à liquide 16 sont formés à la périphérie du tambour 1 entre à chaque fois deux parois pleines 17, qui prolongent la cloison axiale 14 et bordent des encoches 18, ménagées dans les cloisons diamétrales pleines 11. Chaque conduit à liquide 16 débouche, d'une part, en 16 a, derrière le fond 6 du panier 5 de chaque cellule en considérant le sens de rotation du tambour et, d'autre part, en 16 b dans une cellule de l'autre série de cellules qui fait partie du compartiment distant d'une unité, de celui dont fait partie la cellule d'origine.

Conformément à l'invention, chaque cellule est pourvue d'une tôle 9 disposée devant, en considérant le sens d'écoulement du liquide, la sortie du conduit à liquide débouchant dans la cellule et comportant un épi creux perforé 23 faisant saillie à l'intérieur de la cellule. Le flux de matière solide délimité par les cloisons 11 et 11' vient se répartir entre la virole 1 de l'extracteur et la tôle 9, autour des tôles perforées formant l'épi 23. La fraction principale du flux liquide passe ainsi dans la phase solide suivant une direction sensiblement parallèle à l'axe de l'extracteur, représentée sur la figure 5 par les flèches 20.

La figure 6 représente une variante dans laquelle la tôle 9 présente des perforations ou lumières dans sa partie voisine de l'axe du tambour permettant le passage d'une seconde fraction du flux liquide selon la flèche 21. Le but de ces passages est d'améliorer la répartition du flux liquide dans toutes les directions, mais aussi d'éviter l'accumulation du flux liquide entre les tôles 9 et 17 lors de la rotation de l'extracteur tout en permettant son écoulement vers la zone de mélange 10 des deux phases.

La figure 7 représente une autre variante de l'invention dans laquelle l'épi 23 est formé d'une partie 23' en tôle perforée et d'une partie 23" en tôle pleine qui permet de retarder l'arrivée du flux liquide dans la cellule de mélange. De la valeur donnée à l'angle au sommet $\alpha$ de la partie pleine triangulaire 23" dépend le temps de retardement.

Ces épis de distribution 23 sont associés à un dispositif de brassage permettant une homogénéisation du mélange des deux phases en provoquant des variations de vitesse d'écoulement par restriction des sections de passage. Les figures 8 à 12 représentent ce dispositif de brassage constitué par des chicanes 24 en forme d'U dont les branches sont fixées à la virole 1 et/ou aux cloisons de séparation 3, 11, des différents compartiments ou cellules de l'extracteur. La base de l'U est disposée de façon inclinée par rapport à son support et ses branches sont repliées de façon à dévier l'écoulement du mélange.

La figure 10 montre l'écoulement du mélange, flèches 26, le long de la virole développée. Ces chicanes en forme d'U sont régulièrement disposées de façon alternée à la périphérie des compartiments, la base de l'U étant tournée tantôt vers la périphérie et tantôt vers l'axe du cylindre.

En ce qui concerne ces chicanes, il est possible d'imaginer toute combinaison et tout agencement de ces dispositifs autour de leur forme de principe. Dans certains laveurs rotatifs, elles peuvent être utilisées sans que la présence de l'épi distributeur soit obligatoire. Il doit être entendu que toutes ces modifications ainsi que toutes celles obtenues par la substitution de moyens techniques équivalents à ceux décrits entrent dans le cadre de l'invention.

Des appareils ainsi équipés trouvent des applications dans de nombreux domaines, mais tout particulièrement en sucrerie.

0007859

— 1 —

Revendications de brevet

1. Perfectionnements aux appareils rotatifs de lavage et d'extraction à contre-courant, constitués par un cylindre horizontal, divisé en une série de compartiments délimités par des cloisons, dans lesquels la phase solide est à chaque fois mélangée à, puis séparée de la phase liquide, cette séparation s'effectuant à l'aide d'éléments de relevage perforés, permettant au liquide de s'échapper et de passer dans le compartiment suivant, et équipés de système de distribution du liquide, caractérisés par le fait que le système de distribution du liquide est formé par une tôle (9) disposée devant l'entrée du liquide dans le compartiment, tôle comportant une ouverture (22) aux bords de laquelle vient se raccorder un épi (23) creux et perforé faisant saillie dans le compartiment de manière que le flux liquide passe dans la phase solide suivant une direction (20) sensiblement parallèle à l'axe de l'appareil.

2. Appareil selon la revendication 1, caractérisé par le fait que la tôle (9) qui porte l'épi (23) est perforée ou ajourée sur toute sa surface.

3. Appareil selon la revendication 1 ou 2, caractérisé par le fait que la tôle (9) et l'épi (23) sont perforés ou ajourés seulement sur une partie de leur surface.

4. Appareil selon une des revendications précédentes, caractérisé par le fait qu'à l'intérieur des compartiments sont disposées des chicanes (24) destinées à améliorer le contact entre phases liquides et solides et que ces chicanes sont fixées sur la portion du cylindre (1) et/ou sur les cloisons (3, 11) délimitant les compartiments.

5. Appareil selon la revendication 4, caractérisé par le fait que les chicanes (24) sont formées par des tôles pliées en forme d'U, la base de l'U étant tournée alternativement vers la périphérie, puis vers l'axe du cylindre (1) et les branches de l'U étant fixées aux cloisons (3, 11) adjacentes de façon à provoquer des variations de vitesse d'écoulement par restriction des sections de passage.

FIG 2

FIG 1

FIG 3

FIG 4

FIG 5

FIG 6

FIG 7

0007859

4/4

FIG 8

FIG 9

FIG 10

FIG 11    FIG 12

# RAPPORT DE RECHERCHE EUROPEENNE

**Office européen des brevets**

Numéro de la demande

EP 79 40 0504

| | DOCUMENTS CONSIDERES COMME PERTINENTS | | CLASSEMENT DE LA DEMANDE (Int. Cl. 3) |
|---|---|---|---|
| Catégorie | Citation du document avec indication, en cas de besoin, des parties pertinentes | Revendication concernee | B 01 D 11/02<br>C 13 D 1/10 |
| A | FR - A - 2 103 665 (RAFFINERIE TIRLEMONTOISE) | | |
| A | FR - A - 2 002 508 (RAFFINERIE TIRLEMONTOISE) | | |
| A | FR - A - 2 334 395 (RAFFINERIE TIRLEMONTOISE) | | |
| A | US - A - 3 930 801 (PINET) | | |
| A | DE - C - 332 708 (AMME et al.) | | |

- - - -

**DOMAINES TECHNIQUES RECHERCHES (Int. Cl. 3)**

B 01 D 11/02
C 13 D 1/10

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons

&: membre de la même famille, document correspondant

Le présent rapport de recherche a été établi pour toutes les revendications

| Lieu de la recherche | Date d'achevement de la recherche | Examinateur |
|---|---|---|
| La Haye | 23-10-1979 | HILD |

OEB Form 1503.1 06.78